Europäisches Patentamt

European Patent Office

Office européen des brevets

(11) EP 1 420 541 A2

(19)

(12) # EUROPEAN PATENT APPLICATION

(43) Date of publication:
19.05.2004 Bulletin 2004/21

(51) Int Cl.⁷: H04L 1/18, H04L 1/00

(21) Application number: 03257171.3

(22) Date of filing: 13.11.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 14.11.2002 US 426424 P
22.01.2003 US 441738 P
12.03.2003 US 454180 P
06.08.2003 US 492807 P

(71) Applicant: Hughes Electronics Corporation
El Segundo, CA 90245 (US)

(72) Inventors:
• Border, John L.
Poolesville, Maryland 20837 (US)
• Moseley, Martin
Rockville, Maryland 20850 (US)
• Laborde, Enrique
Gaitherburg, Maryland 20878 (US)
• Kelly, Frank M.
Walkersville, Maryland 21793 (US)
• Hammons, Roger
N. Potomac, Maryland 20878 (US)
• Eroz, Mustafa
Germantown, Maryland 20874 (US)

(74) Representative: Jackson, Richard Eric et al
Carpmaels & Ransford,
43-45 Bloomsbury Square
London WC1A 2RA (GB)

(54) **Systems and methods for transmitting internet protocol data via satellite**

(57)     A system for transmitting data packets over an air interface includes a logic device and a transmitter. The logic device receives data packets from a user device and encodes the data packets using a turbo coding scheme. The logic device may then modulate the turbo coded data and forward the modulated data to a transmitter. The transmitter may then transmit the modulated data to a satellite over the air interface.

FIG. 8

**Description**

RELATED APPLICATIONS

This application claims priority under 35 U.S.C. § 119 based on U.S. Provisional Application Serial No. 60/426,424, filed November 14, 2002, U.S. Provisional Application Serial No. 60/441,738 filed January 22, 2003, U. S. Provisional Application Serial No. 60/454,180, filed March 12, 2003, U.S. Provisional Application Serial,No. 60/479,939, filed June 19, 2003, and U.S. Provisional Application Serial No. 60/492,807 filed August 6, 2003, the disclosures of which are all incorporated herein by reference.

BACKGROUND OF THE INVENTION

Field of the Invention

The present invention relates generally to satellite communications and, more particularly, to transmitting Internet Protocol (IP) data via satellite.

Description of Related Art

Internet Protocol over Satellite (IPoS) systems have been used to transmit and receive conventional IP data. In such systems, remote terminals communicate with a hub via one or more satellites.
As users' demands for increased data throughput continue to increase, new ways of transmitting data via IPoS systems are needed. Therefore, a need exists for systems and methods that provide new ways in which to transmit IP data in IPoS systems.

SUMMARY OF THE INVENTION

Systems and methods consistent with the present invention address these and other needs by encoding IP data using a turbo coding scheme and transmitting the IP data using a turbo coded burst structure.
In accordance with the principles of the invention as embodied and broadly described herein, a system that includes at least one logic device and a transmitter is provided. The logic device is configured to receive data packets from a user device, encode the data packets using a turbo coding scheme, modulate the turbo coded data and forward the modulated data. The transmitter is configured to receive the modulated data and transmit the modulated data to a satellite.
In another implementation consistent with the present invention, a method for transmitting IP data includes receiving, by a terminal device, a plurality of data packets. The method also includes encoding the data packets using a turbo coding scheme and modulating the turbo coded data. The method further includes transmitting the modulated data to a satellite.
In still another implementation consistent with the present invention, a terminal configured to transmit and receive data packets via a satellite is provided. The terminal includes a memory configured to store data and at least one logic device. The logic device is configured to transmit IP data to a hub via satellite and store the IP data in the memory until an acknowledgement is received. The logic device is also configured to delete the IP data in the memory when the acknowledgement is received. The logic device is further configured to receive a message from the hub when an error in the IP data was detected, where the message includes a packet sequence number, and re-transmit a portion of the IP data based on the packet sequence number.

BRIEF DESCRIPTION OF THE DRAWINGS

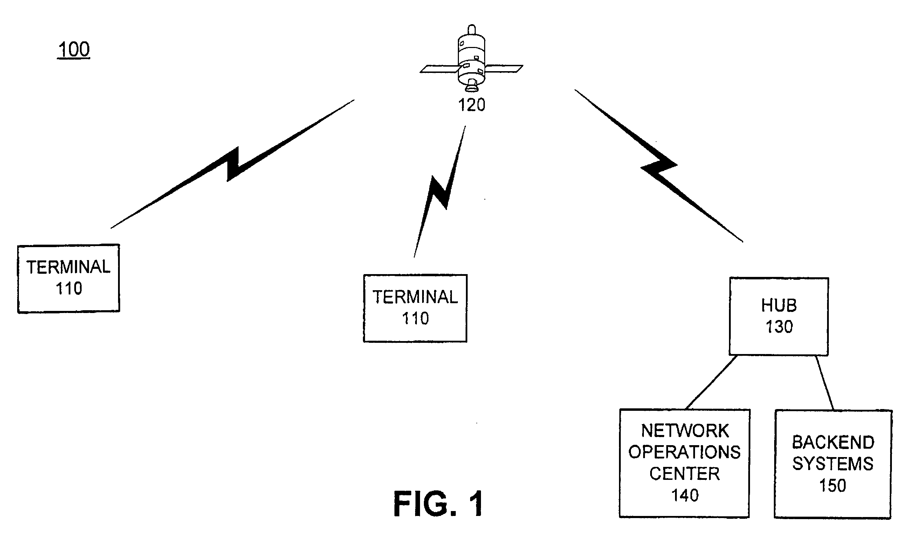

The accompanying drawings, which are incorporated in and constitute a part of this specification, illustrate the invention and, together with the description, explain the invention. In the drawings,
[0010]    Fig. 1 is a diagram of an exemplary network in which systems and methods consistent with the present invention may be implemented;
Fig. 2 is a diagram of an exemplary terminal of Fig. 1 in an implementation consistent with the present invention;
Fig. 3 is an exemplary functional block diagram of the terminal of Fig. 1 in an implementation consistent with the present invention;
Fig. 4 is a flow diagram illustrating exemplary processing associated with processing data packets by the terminal of Fig. 1 in an implementation consistent with the present invention;

Figs. 5-7 are exemplary block diagrams illustrating the processing of data packets and data packet structures in accordance with an implementation consistent with the present invention;

Fig. 8 is a functional block diagram illustrating an exemplary in-route processing system implemented by the terminal of Fig. 1 in an implementation consistent with the present invention;

Fig. 9 is an exemplary functional block diagram of the encoder of Fig. 8 in an implementation consistent with the present invention;

Fig. 10 is an exemplary functional block diagram illustrating a constituent encoder of Fig. 9 in an implementation consistent with the present invention;

Figs. 11A-11D are exemplary block diagrams illustrating the transmission of data bursts in an implementation consistent with the present invention;

Fig. 12 is an exemplary in-route framing structure used to transmit data bursts in an implementation consistent with the present invention; and

Fig. 13 is an exemplary flow diagram illustrating a selective repeat procedure in an implementation consistent with the present invention.

DETAILED DESCRIPTION

The following detailed description of the invention refers to the accompanying drawings. The same reference numbers in different drawings may identify the same or similar elements. Also, the following detailed description does not limit the invention. Instead, the scope of the invention is defined by the appended claims and equivalents.

Systems, devices and methods consistent with the present invention transmit and receive IP data via satellite. The data may be transmitted using a turbo coded burst structure that provides for the efficient transfer of data. A selective repeat procedure may also be performed when one or more data packets are received with errors.

EXEMPLARY NETWORK

Fig. 1 illustrates an exemplary network in which methods, devices and systems consistent with the present invention may be implemented. Network 100 includes a number of terminals 110, a satellite 120, a hub 130, a network operations center 140 and backend systems 150. The number of components illustrated in Fig. 1 is provided for simplicity. It will be appreciated that a typical network 100 may include more or fewer components than are illustrated in Fig. 1.

Terminals 110 transmit and receive information over an air/free space interface to/from satellite 120. Terminals 110 may interface with user devices, such as personal computers (PCs), lap top computers, personal digital assistants (PDAs), wireless telephones, etc., to provide users with broadband IP communication services. Terminals 110 may directly connect to a user device via, for example, a universal serial bus (USB). Terminals 110 may also connect to user devices via a local area network (LAN) interface, such as an Ethernet interface.

Satellite 120 may support two-way communications with earth-based stations, such as terminals 110 and hub 130. Satellite 120 may include one or more uplink antennas and one or more downlink antennas for receiving data from and transmitting data to terminals 110 and hub 130. For example, satellite 120 may receive data transmitted from terminal 110 or hub 130 in the C-band, Ku-band, Ka-band, X-band, etc. Satellite 120 may also include transmit circuitry to permit satellite 120 to use the downlink antenna(s) to transmit data using various ranges of frequencies. For example, satellite 120 may transmit data in any of the above frequency bands (i.e., C-band, Ku-band, Ka-band, X-band) or in other frequency bands.

Hub 130 may support Internet access for a large number of terminals 110 via satellite 120. Hub 130 may access space segment resources from multiple satellites 120 and manage such resources. Network operations center 140 may manage network 100, including hub 130. For example, network operations center 140 may receive data from terminals 110 via hub 130 and determine the appropriate power levels associated with transmitting data to terminals 110. Hub 130 may then transmit uplink information to satellite 120 regarding downlink power control.

Backend systems 150 may include routers, firewalls, domain name servers (DNSs), etc. Backend systems 150 provide the interface between network 100 and an external public network, e.g., the Internet.

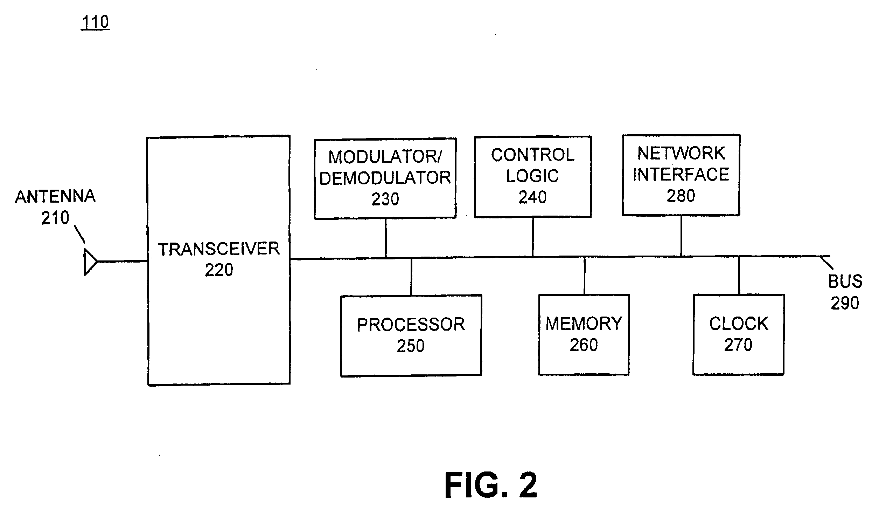

Fig. 2 illustrates an exemplary configuration of a terminal 110 consistent with the present invention. Referring to Fig. 2, terminal 110 includes antenna 210, transceiver 220, modulator/demodulator 230, control logic 240, processor 250, memory 260, clock 270, network interface 280 and bus 290.

Antenna 210 may include one or more conventional antennas capable of transmitting/receiving signals via radio waves. For example, antenna 210 may transmit/receive data in the C-band, Ku-band, Ka-band, X-band. Antenna 210 may also transmit/receive information in other frequency bands.

Transceiver 220 may include well-known transmitter and receiver circuitry for transmitting and/or receiving data in a network, such as network 100. Modulator/demodulator 230 may include conventional circuitry that combines data signals with carrier signals via modulation and extracts data signals from carrier signals via demodulation. Modulator/demodulator 230 may also include conventional components that convert analog signals to digital signals, and vice versa, for communicating with other devices in terminal 110.

Control logic 240 may include one or more logic devices, such as application specific integrated circuits (ASICs), that control the operation of terminal 110. For example, control logic 240 may include logic circuitry that performs a turbo coding operation for received data packets, as described in more detail below.

Processor 250 may include any type of conventional processor or microprocessor that interprets and executes instructions. Processor 250 may perform data processing functions relating to transmitting data from terminal 110 to hub 130.

Memory 260 may provide permanent, semi-permanent, or temporary working storage of data and instructions for use by processor 250 in performing processing functions. Memory 260 may include a conventional random access memory (RAM) or another dynamic storage device that stores information and instructions for execution by processor 250. Memory 260 may also include a conventional read only memory (ROM), an electrically erasable programmable read only memory (EEPROM) or another static or non-volatile storage device that stores instructions and information for use by processor 250. Memory may further include a large-capacity storage device, such as a magnetic and/or optical recording medium and its corresponding drive.

Clock 270 may include conventional circuitry for performing timing-related operations associated with one or more functions performed by terminal 110. Clock 270 may include, for example, one or more oscillators and one or more counters.

Network interface 280 may include an interface that allows terminal 110 to be coupled to an external network. For example, network interface 280 may include a USB interface, an Ethernet interface for communicating to a LAN, an asynchronous transfer mode (ATM) network interface and/or an interface to a cable network. Alternatively, network interface 280 may include other mechanisms for communicating with other devices and/or systems.

Bus 290 may include one or more conventional buses that interconnect the various components of terminal 110 to permit the components to communicate with one another. The configuration of terminal 110, shown in Fig. 2, is provided for illustrative purposes only. One skilled in the art will recognize that other configurations may be employed. Moreover, one skilled in the art will appreciate that a typical terminal 110 may include other devices that aid in the reception, transmission, or processing of data. It should also be understood that various components of terminal 110 may be located remotely from each other. For example, antenna 210 may be located outdoors, while other elements in terminal 110 may be located indoors.

Terminal 110, consistent with the present invention, performs processing associated with transmitting and receiving IP data, such as IPv4 or IPv6 data, via satellite 120. Terminal 110 may perform such processing, described in detail below, in response to processor 250 executing sequences of instructions contained in a computer-readable medium, such as memory 260. It should be understood that a computer-readable medium may include one or more memory devices and/or carrier waves. The instructions may be read into memory 260 from another computer-readable medium or from a separate device via network interface 280. Execution of the sequences of instructions contained in memory 260 causes processor 250 to perform the process steps that will be described hereafter. In alternative implementations, hard-wired circuitry may be used in place of, or in combination with, software instructions to implement the present invention. For example, control logic 240 and/or other devices, such as modulator/demodulator 230, may perform one or more of the acts described below. In still other alternatives, various acts may be performed manually, without the use of terminal 110. Thus, the present invention is not limited to any specific combination of hardware circuitry and software.

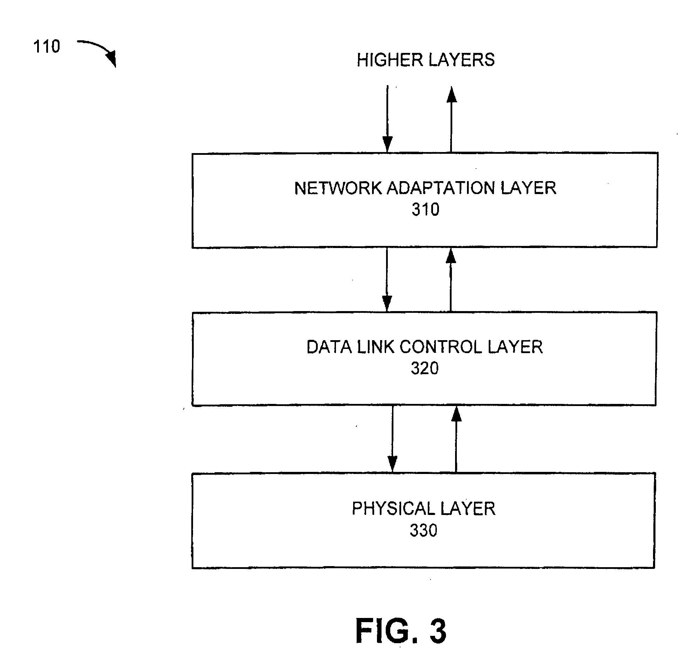

Terminals 110, as discussed above, may receive IP data packets from user devices, such as PCs, laptops, PDAs, etc. In an exemplary implementation, terminals 110 may then process the data packets and forward the data to hub 130 using an IPoS communications protocol. In this implementation, the functions performed by any of terminals 110 may be logically separated into a number of IPoS protocol related layers. For example, Fig. 3 illustrates an exemplary functional diagram of a terminal 110 consistent with the present invention. Referring to Fig. 3, terminal 110 includes a network adaptation layer 310, a data link control (DLC) layer 320 and a physical (PHY) layer 330. Layers 310-330 may communicate with each other and with higher layers, such as an application layer and transport layer. Exemplary functions associated with each of layers 310-330 are described briefly below.

Network adaptation layer 310 receives data from higher layers, e.g., an application layer, a transport layer, etc., and controls user access to radio resources needed for access to satellite 120. Network adaptation layer 310 may also be responsible for IP packet transport. This may include determining a class of service of the IP packet, application type, destination, etc. Network adaptation layer 310 may further perform traffic management functions, such as traffic shedding and policing functions for IP packets before they are forwarded for transport.

DLC layer 320 provides transport services for transmitting data over network 100. DLC layer 320 may include a satellite link control (SLC) sublayer that is responsible for transmission of packets between terminal 110 and hub 130. The SLC sublayer may generate session IDs and map incoming packets to the corresponding session, segment and reassemble variable length higher layer data packets into smaller protocol data units (PDUs), encrypt various IP PDUs etc. DLC layer 320 may also include a media access control (MAC) sublayer that provides for data transfer, re-allocation of radio resources and error detection functions. The MAC sublayer may also provide for the transfer of data to peer MAC entities.

PHY layer 330 provides the lower level functionality related to modulation, error control and transporting data via the air interface. For example, PRY layer 330 performs the initial acquisition, synchronization and ranging procedures with hub 130, including timing alignment of the transmissions. PHY layer 330 may also adjust the power with which terminal 110 transmits data. PHY layer 330 may further perform scrambling, coding, modulation, error correction, timing, frequency synchronization, and other functions associated with transmitting data over the air interface, as described in more detail below.

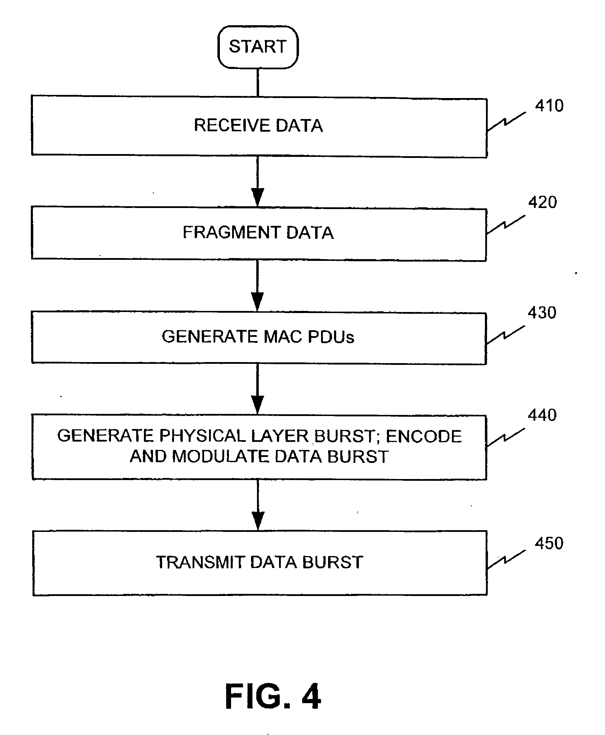

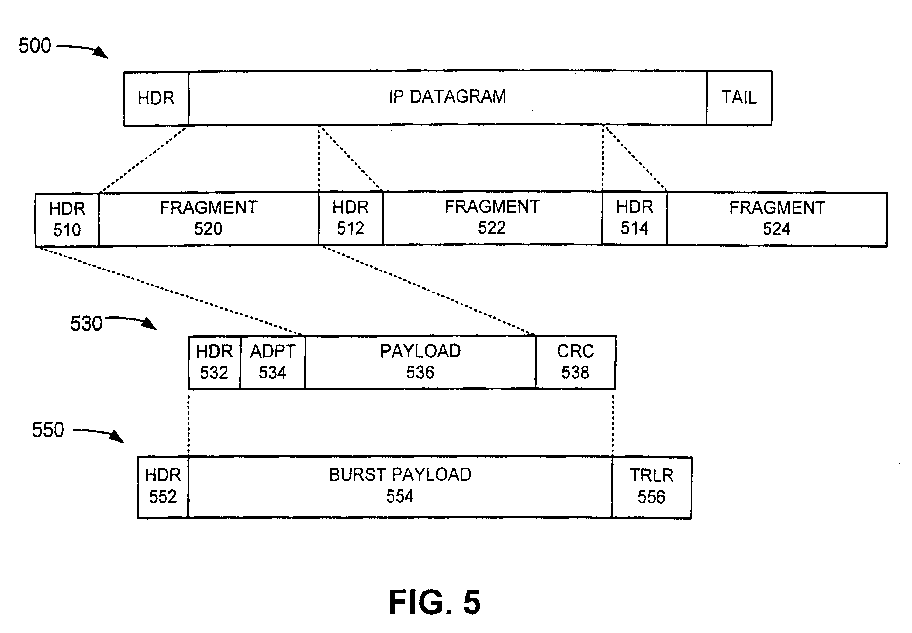

As described above, terminal 110, via layers 310-330, performs various functions associated with transmitting data to hub 130. Fig. 4 illustrates an exemplary flow diagram associated with processing data packets by terminal 110 to hub 130 via satellite 120. Assume that terminal 110 has already started up and has performed an initialization procedure with hub 130, i.e., performed timing synchronization, power control, etc. Further assume that terminal 110 receives data from a user device, such as a PC connected to terminal 110. Network adaptation layer 310 (or another higher layer) may receive the data packet(s) in accordance with the IPoS protocol (act 410). Fig. 5 illustrates an exemplary IP datagram that may be received at act 410. Referring to Fig. 5, IP datagram 500 may include a number of packets and may include an IP header and a tail portion. Network adaptation layer 310 may forward IP datagram 500 to DLC layer 320.

DLC layer 320 may fragment the IP datagram 500 into a number of datagram fragments (act 420), as illustrated in Fig. 5. For example, referring to Fig. 5, SLC sublayer of DLC layer 320 may break IP datagram 500 into a number of fragments labeled 520, 522 and 524. SLC sublayer may also attach a header, labeled 510, 512 and 514, to each fragment. The headers 510-514 may correspond to the header attached to the IP datagram 500. The MAC sublayer of DLC layer 320 may further generate a MAC PDU based on each fragment (act 430). For example, the MAC sublayer may take datagram fragment 520 and its associated header 510 and encapsulate this data in payload 536 of MAC PDU 530, as illustrated in Fig. 5. The MAC sublayer may also insert a MAC header field 532 and an adaptation field 534 to the front of MAC PDU 530 and a CRC field 538 at the end of MAC PDU 530. MAC header 532, as described in more detail below, may include addressing information and other information based on the type of coding used to encode the MAC PDUs and the type of channel used to transmit the data to satellite 120. Adaptation field 534, as described in more detail below, may provide management and control information and may also be used for padding the MAC PDU 530. CRC field 538 may be used to detect errors in the transmission of MAC PDU 530.

The MAC sublayer generates MAC PDUs 530 for each of the data fragments in a similar manner. The MAC sublayer may forward the MAC PDUs 530 to PHY layer 330.

PHY layer 330 receives the MAC PDUs 530 from the MAC sublayer. PHY layer 330 generates a physical layer burst 550 using the MAC PDUs (act 440), as illustrated in Fig. 5. Referring to Fig. 5, burst 550 includes a header 552, burst payload 554 and trailer 556. PHY layer 330 inserts the MAC PDU 530 into the burst payload 554. PHY layer 330 also attaches header 552 and trailer 556 to the burst payload 554. PHY layer 330 may also scramble, encode and modulate the burst 550 using carrier signals for transmission over one or more channels (act 440). In an exemplary implementation, PHY layer 330 may use a turbo coding scheme to encode the data, as described in more detail below. Terminal 110 may then transmit the burst 550 to hub 130 using logical channels. Each burst 550 may be transmitted over a block of consecutive slots associated with a time interval defined by an in-route bandwidth allocation procedure. Each assigned interval consists of a sequence of slots within the multi-frequency time division multiple access (TDMA) structure defined at PHY layer 330.

As described above, terminal 110 may generate data bursts 550 for transmission to hub 130. The data bursts 550 may include user, control and management information and may be transmitted in network 100 via logical channels. The logical channels may be unidirectional and may be defined for both out-route and in-route directions. In-route, as described herein, refers to transmitting information from terminal 110 to hub 130 and out-route refers to receiving information by terminal 110 from hub 130. In an exemplary implementation, the in-route logical channels may include unallocated channels and allocated channels. Unallocated channels may be shared by multiple terminals 110 using a contention access procedure. Unallocated channels may be primarily used for control messages, such as bandwidth allocation requests and ranging requests. Allocated channels may include slots or sequences of slots in an allocated time interval that are dedicated to a specific terminal 110 for the transmission of user information. In either case, the in-route logical channels provide point-to-point connectivity from a terminal 110 to hub 130 using narrowband channels, as described in more detail below.

MAC header 532 (Fig. 5) may vary based on whether the data burst is being transmitted over an allocated or an unallocated channel and the type of coding used to encode the data burst. For example, MAC header 532 may include a particular number of bytes based on the type of coding used to code the data. In an exemplary implementation using turbo coding, described in more detail below, header 532 may include six bytes. Adaptation field 534 may include 0 to M bytes and may be used to provide management and control information, such as remote configuration information or ranging requests. Adaptation field 534 may also be used for padding to ensure that MAC PDU 530 fits the aggregated payload of the group of bursts.

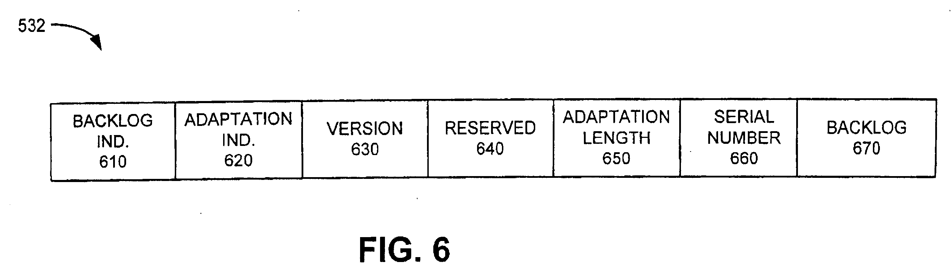

Fig. 6 illustrates an exemplary MAC header 532 in an implementation consistent with the present invention. Referring to Fig. 6, MAC header 532 includes a backlog indicator field 610, an adaptation indicator field 620, a version field 630, a reserved field 640, an adaptation length field 650, a serial number field 660 and a backlog field 670. Backlog indicator field 610 indicates the presence of backlog field 670. For example, if the backlog indicator field is set to "1", this indicates the presence of a backlog field 670. Backlog field 670 may be present for in-route bandwidth allocation requests or ranging requests, unless there is no backlog. Adaptation indicator field 620 may indicate the presence/absence of adaptation field 534 (Fig. 5). For example, if adaptation indicator field 620 is set to "0", adaptation field 534 may be present. Version field 630 identifies the version of the IPoS protocol (e.g., IPv4 or IPv6) used in network 100. Reserved field 640 may be reserved for future use and may be ignored by hub 130 on reception. Adaptation length field 650 may indicate the number of bytes used by adaptation field 534 if adaptation indicator 620 is set. For example, a value of "0" may indicate that the adaptation field 534 is two bytes long and a value of "1" may indicate that the adaptation field 534 is one byte long. Serial number field 660 may contain, for example, a 26-bit serial number associated with terminal 110. Hub 130 may use the serial number information when generating a unicast MAC address to send data packets to terminal 110.

Backlog field 670 may be a 2-byte field that stores prioritized backlog information. For example, backlog field 670 may provide hub 130 with information indicating the amount of data that terminal 110 has that is backlogged, i.e., remains to be sent. Hub 130 may use this information when allocating in-route bandwidth to a number of terminals 110. The first byte in backlog filed 670 may provide the total backlog in bytes. The total backlog may be encoded as a floating point number with a 2-bit exponent field and a 6-bit mantissa that may be rounded by terminal 110. In an exemplary implementation, the maximum value represented by backlog field 670 may be 64K, which may represent a maximum queue size to be tracked. The 64K backlog may represent the amount of data that will fully occupy a 256 kilo symbols per second (ksps) in-route burst for two seconds. The second byte in backlog field 670 identifies the highest priority for which a backlog exists. This information may be represented by the two highest order bits in the second byte. The remainder of the second byte of backlog field 670 may identify the percentage of the backlog that belongs to the priority indicated by the two higher-order bits. The percentage may be represented in 1/64 units.

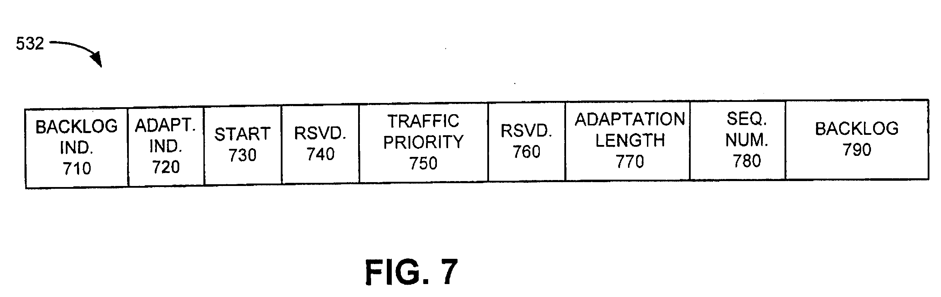

The MAC PDU 530 format for allocated channels coded using a turbo coding scheme may also include header 532, adaptation field 534, payload 536 and CRC field 538. Fig. 7 illustrates an exemplary MAC header 532 for allocated channels coded using a turbo coding scheme. Referring to Fig. 7, MAC header 532 includes backlog indicator field 710, adaptation indicator 720, start field 730, reserved field 740, traffic priority field 750, reserved field 760, adaptation length field 770, sequence number field 780 and backlog field 790. Fields 710, 720, 740, 760, 770 and 790 may contain information similar to their corresponding fields discussed with respect to MAC header 532 in Fig. 6. Start field 730 indicates if the payload 536 is the start of a new IP datagram or the continuation of a previous IP datagram. Traffic priority field 750 indicates the priority level of the datagram at the beginning of the burst. For example, a preempted datagram may continue in the current burst. In this case, the continuing datagram may be at a different priority level than the datagram at the beginning of the burst. In an exemplary implementation, traffic priority field 750 may be two bits in length and may represent one of four different priority levels. Sequence number field 780 may be used for a retransmission protocol, as described in more detail below, and may include the byte address of the first byte of the encapsulated payload or IP fragment.

As described above, the MAC headers 532 differ based on whether the data is being transmitted over an unallocated channel or an allocated channel. This provides terminal 110 with increased flexibility associated with transmitting data to hub 130.

TURBO-CODING

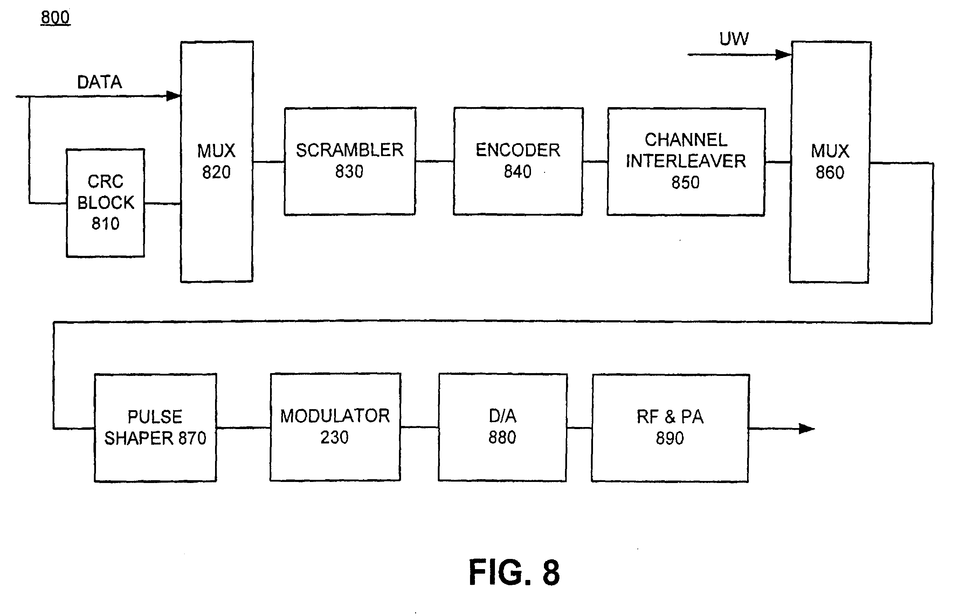

As described above, physical layer bursts 550 (Fig. 5) may be encoded and modulated via carrier signals for transmission to hub 130 via satellite 120. In an exemplary implementation consistent with the present invention, physical layer 330 implements a turbo coding scheme for coding the data bursts. Fig. 8 is a functional block diagram illustrating an exemplary in-route processing system 800 implemented in PHY layer 330 for performing turbo coding. It should also be understood that DLC layer 320 and network adaptation layer 310 may also perform functions associated with in-route processing system 800. Referring to Fig. 8, system 800 includes cyclic redundancy check (CRC) block 810, multiplexer 820, scrambler 830, encoder 840, channel interleaver 850, multiplexer 860, pulse shaper 870, modulator 230, D/A converter 880 and radio frequency (RF) translator and power amplifier (PA) 890. The logical blocks illustrated in system 800 may be implemented by any one of or a combination of control logic 240, processor 250 executing instructions stored in memory 260, and/or by other devices in terminal 110, such as modulator/demodulator 230 (Fig. 2).

CRC block 810 may generate redundancy information associated with each data packet received by terminal 110. In an exemplary implementation consistent with the present invention, each data packet may be protected by a 16-bit CRC value. An exemplary CRC generator polynomial used to generate each 16-bit CRC value may be $g(x) = x^{16} + x^{12} + x^5 + 1$. Other CRC generator polynomials may also be used. The CRC bits may be used at the receiver end (e.g., hub 130) to verify the integrity of the transmitted data packets. Multiplexer 820 may append the generated 16-bit CRC value to the end of each data packet and forward the data packets and appended CRC values to scrambler 830.

Scrambler 830 may scramble or randomize the received data stream to avoid the concentration of transmitted energy in particular parts of the spectrum and forward the randomized data stream to encoder 840. In an exemplary implementation, scrambler 830 may be a CCITT v.35 data scrambler implemented using odd parity. Other types of scrambling schemes may also be used. Encoder 840 receives the data from scrambler 830 and encodes the data. In an exemplary implementation, encoder 840 implements a turbo coding scheme, as described in more detail below, and forwards the turbo coded data to channel interleaver 850.

Channel interleaver 850 may modify the order of the transmitted bits to randomize errors that may be introduced in the in-route channel and may forward the interleaved data to multiplexer 860. In an exemplary implementation, channel interleaver 850 may be a block interleaver having a maximum size of, for example, 2048 bits. Channel interleaver 850 may interleave on the bit boundary, not the symbol boundary. When a burst (or subburst) size of the encoded bits is greater than 2048 bits, channel interleaver 850 may partition the burst size into two equal segments. If the segments are still greater than 2048 bits in size, then each segment may be further divided into two equal parts. For various encoded burst sizes of E bits, channel interleaver 850 may segment the encoded bit sequence into the following lengths to remain below the interleaver size limit:

| E | for 0 bit < $E \leq$ 2048 bits |
|---|---|
| E/2, E/2 | for 2048 bits < $E \leq$ 4096 bits |
| E/4+1, E/4+1, E/4, E/4 | for 4096 bits < $E \leq$ 8192 bits |
| E/8+1, E/8+1 , E/8, E/8, E/8, E/8 , E/8, E/8 | for 8192 bits < $E \leq$ 12288 bits |

For each data segment, the actual interleaver size may be the smallest power of 2 greater than the segment size. In addition, when possible, the number of columns of the channel interleaver 850 may be equal to the number of rows. Alternatively, the number of columns of channel interleaver 850 may be equal to twice the number of rows. For example, if the number of bits E is less than 257, channel interleaver 850 may include 16 rows and 16 columns, if the number of bits E is between 257 and 512, channel interleaver 850 may include 16 rows and 32 columns, if the number of bits E is between 513 and 1024, channel interleaver 850 may include 32 rows and 32 columns and number of bits E is between 1025 and 2048, channel interleaver 850 may include 32 rows and 64 columns.

Channel interleaver 850 may write the encoded data into an interleaver table from the lowest numbered column to the highest numbered column of the lowest numbered row before proceeding to filling the next higher numbered row. Channel interleaver 850 may read the data from the lowest numbered row to the highest numbered row of the lowest numbered column before proceeding to output the next higher numbered column. If a location of channel interleaver 850 has not been written to, that location may be skipped during the interleaved output sequence.

Multiplexer 860 receives the interleaved data from channel interleaver 850 and combines the interleaved data with a number of bits of data, referred to as unique word (UW) bits, to assist with synchronization between terminal 110 and hub 130. For example, for incoming data coded using a turbo coding scheme at 128 kilosymbols per second (ksps) or 256 ksps for a quadrature-based system, a series of 24 UW bits (e.g., 1010 1100 1100 0220 1101 1100) may be used to assist with the timing synchronization of the received signal. Multiplexer 360 may output the combined data to pulse shaper 870.

Pulse shaper 870 receives the signal from multiplexer 860 and conforms the received signal to the particular spectrum that will be used to transmit the data. For example, in an exemplary implementation, pulse shaper 870 may filter the received signal using a square root raised cosine filter. The filter's output, H(f), consistent with the present invention, may be defined by the following equations:

$$H(f) = 1 \qquad \text{for } |f| < f_N(1-\alpha)$$

$$H(f) = \left\{ \frac{1}{2} + \frac{1}{2}\sin\frac{\pi}{2f_N}\left[ \frac{f_N - |f|}{\alpha} \right] \right\}^{\frac{1}{2}} \quad \text{for } f_N(1-\alpha) \leq |f| \leq f_N(1+\alpha)$$

$$H(f) = 0 \qquad \text{for } |f| > f_N(1 - \alpha)$$

where: $f_N = \dfrac{1}{2T_s} = \dfrac{R_s}{2}$ is the Nyquist frequency, $T_s$ is the symbol duration and $\alpha$ is a roll off factor. In an exemplary implementation, $\alpha$ may be 0.4 (i.e., 40%).

Modulator 230 receives the output of pulse shaper 870 and maps the baseband bits into a constellation of allowed carrier phases. In an exemplary implementation, modulator 230 uses a constant envelope offset quadrature phase shift keying (CEO-QPSK) modulation scheme to modulate the data. In this implementation, each pair of bits in the data signal may be represented by a modulated symbol. In other words, each of bit pairs (0,0), (0,1), (1,0) and (1,1) may be represented by a different modulated symbol. Modulator 230 forwards the modulated symbols to D/A converter 880.

D/A converter 880 transforms the digital symbols of the in-route waveform into an analog signal and forwards the analog data to RF translator and PA 890. The RF translator portion of RF and PA 890 performs frequency translation of the received signal and the PA portion of RF translator and PA 890 amplifies the signal. RF and PA 890 may then forward the signal to transceiver 220 for transmission.

As described above, encoder 840 may implement a turbo coding scheme. A turbo coding scheme uses a combination of two or more constituent encoders and interleavers to encode a stream of data. The constituent encoders may generate parity symbols using recursive, convolutional codes with each encoder encoding a portion of the same input bits, as described in more detail below.

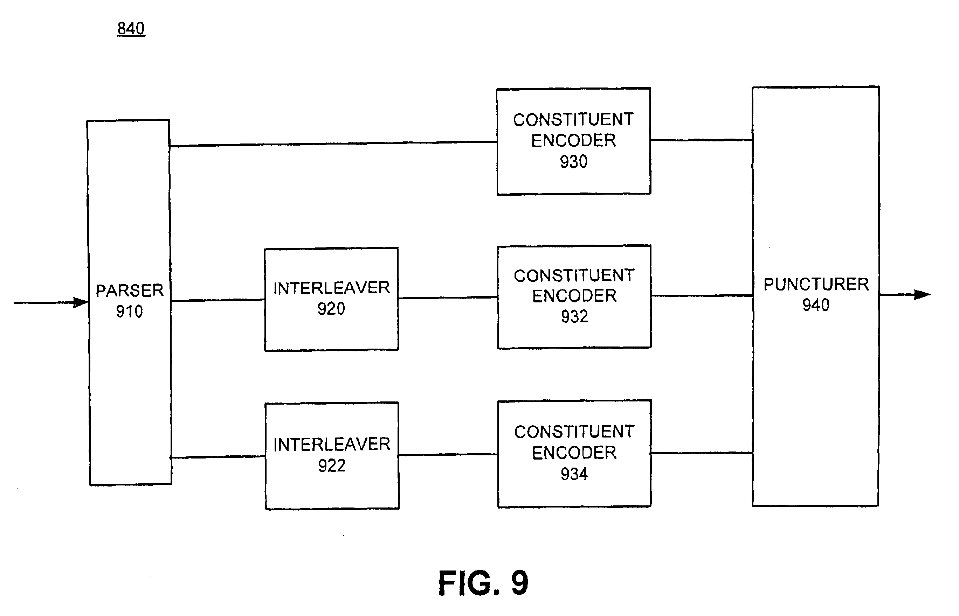

Fig. 9 illustrates an exemplary block diagram of encoder 840 of Fig. 8 implementing a turbo coding scheme. In an exemplary implementation, encoder 840 may be implemented using parsed, parallel concatenated convolution codes. Referring to Fig. 9, encoder 840 includes parser 910, interleavers 920 and 922, constituent encoders 930, 932 and 934 and puncturer 940. Parser 910, consistent with the present invention, divides the received information bits into a number of streams. For example, parser 910 may divide information bits in a burst of L bits represented by $\{u_k\}_{k=1}^{k=L}$, into the following three subgroups: a first subgroup representing the first P bits $\{u_k\}_{k=1}^{P}$, a second subgroup representing the following R bits $\{u_k\}_{k=P+1}^{k=P+R}$, and a third subgroup representing the last S bits $\{u_k\}_{k=P+R+1}^{k=P+R+S}$. The values P, R, and S may be determined as follows:

$$\begin{cases} \text{if } (L \bmod 3) = 0, \text{ then, } P = R = S = L/3 \\ \text{if } (L \bmod 3) = 1, \text{ then, } P = (L-1)/3+1, R = S = (L-1)/3 \\ \text{if } (L \bmod 3) = 2, \text{ then, } P = R = (L-2)/3+1, S = (L-2)/3 \end{cases}$$

For example, suppose that L is equal to 11. In this case, L mod 3 is equal to 2 and from the above equations, P = R = (11-2)/3 + 1 or 4 and S = (11-2)/3 or 3. Interleavers 920 and 922 receive data from parser 910 and interleave the data. In an exemplary implementation, each of the interleavers 920 and 922 receive approximately two thirds of the information bits parsed by parser 910. For example, interleaver 920 receives the bits defined by groups R and S and interleaver 922 receives the bits defined by groups P and S.

Interleavers 920 and 922 may then interleave the data received from parser 910. For example, interleavers 920 and 922 may each be implemented using three interleaver tables, designated as IP, IR and IS, with sizes P, R and S, respectively. Interleaver 920 may have a size of R + S and may be formed by interlacing IR and an identity interleaver of size S. Interleaver 922 may have a size of P + S and may be formed by interlacing IP and IS.

Exemplary interleaver tables IP, IR and IS may be constructed as follows. First, two parameters, $r$ and $c$, may be determined based on a desired interleaver size interval. For example, $r$ may equal 4 and $c$ may equal 3. Next, an integer $i$ may be created with $r+c$ bits defined as:

$$i = \underbrace{b_0 b_1 b_2 \ldots b_{c-1} b_c \ldots b_{r+c-1}}_{r+c \quad bits}.$$

Initially all bits in $i$ may be zero. Next, take the first $c$ bits in $i$ and multiply by a constant value determined by the bit-reversed last *r* bits of *i*. Then, keep the last *c* least significant bits (LSB) bits of the product to get the last *c* bits of another *r* + *c* bit integer variable *j*. The bit-reversed last *r* bits in *i* become the first *r* bits in *j* defined by:

$$j = b_{r+c-1} b_{r+c-2} .. b_c \tilde{b}_0 \tilde{b}_1 .. \tilde{b}_{c-1} \text{ where } \tilde{b}_0 \tilde{b}_1 .. \tilde{b}_{c-1} = LSB[k * (b_0 b_1 .. b_{c-1})]$$

If *j* is less than *P*, accept it to the interleaver table as (*i*, *j*); otherwise, discard it. Increment *i* by 1 (*i* = *i* + 1) and repeat the above steps until all P values of the interleaver table are obtained. Alternatively, other processes for interleaving the output of parser 410 may be used.

In each case, interleavers 920 and 922 interleave the bits received from parser 910 and pass the interleaved bits to constituent encoders 932 and 934, respectively. In an exemplary implementation, constituent encoder 932 may encode the interleaved bits defined by subgroups R and S, i.e., $\{u_k\}_{k=P+1}^{k=P+R}$ and $\{u_k\}_{k=P+R+1}^{k=P+R+S}$. Constituent encoder 934 may encode the interleaved bits defined by subgroups P and S, i.e., $\{u_k\}_{k=1}^{P}$ and $\{u_k\}_{k=P+R+1}^{k=P+R+S}$. Constituent encoder 930 may encode the bits defined by subgroups P and R, i.e., $\{u_k\}_{k=1}^{P}$ and $\{u_k\}_{k=P+1}^{k=P+R}$. In this implementation, each of constituent encoders 930-934 encodes approximately two thirds of the L information bits. Constituent encoder 930, however, does not receive interleaved bits, as illustrated in Fig. 9. In other implementations a third interleaver may be used to interleave the bits from parser 910 prior to input into constituent encoder 930.

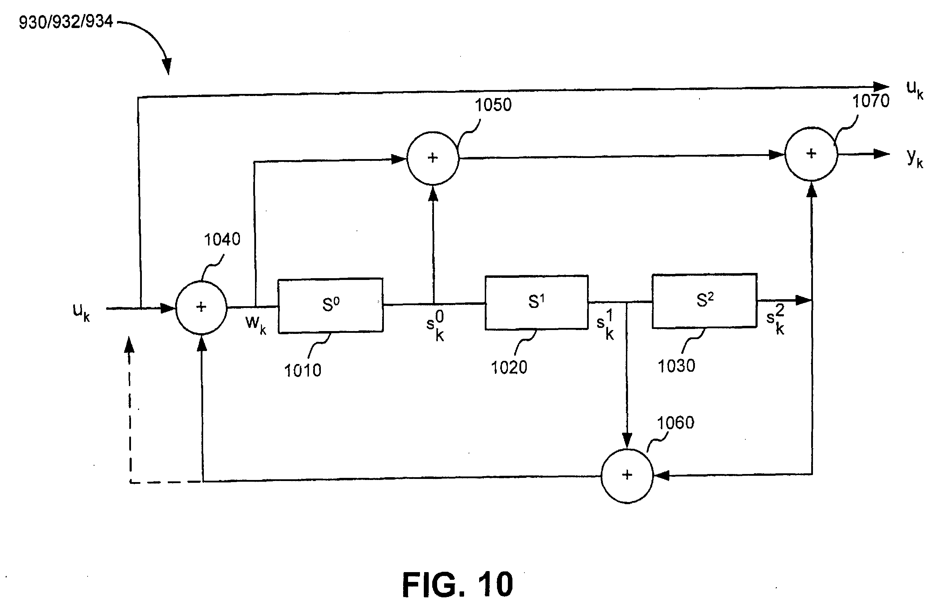

Constituent encoders 930, 932 and 934, consistent with the present invention, may be implemented using a recursive convolutional code. For example, Fig. 10 illustrates an exemplary constituent encoder 930-934 consistent with the present invention.

Referring to Fig. 10, encoders 930-934 may be implemented by a number of memory elements 1010-1030 connected in series and adders 1040-1070. Three memory elements 1010-1030 are illustrated in Fig. 10. In other implementations, more memory elements may be used. Adder 1040 receives the data signal $u_k$ and adds this signal with the output of adder 1060. Adder 1060, as illustrated in Fig. 10, receives the output of memory elements 1020 and 1030, designated as $s_k 1$ and $s_k 2$ and adds these signals. In other words, the outputs of memory elements 1020 and 1030 are added and fed back to adder 1040, which adds this sum with signal $u_k$. Adder 1050 receives the output of memory element 1010, designated as $S_k^0$, and the output of adder 1040 and adds these values. Adder 1070 receives the output of adder 1050 and the output of memory element 1030 (i.e., $S_k^2$) and adds these values to generate a parity information represented by $y_k$. In summary, the parity information $y_k$ and next state equations of encoders 930-934 illustrated in Fig. 10 may be given by:

$$\begin{cases} y_k = w_k + s_k^0 + s_k^2 \\ s_{k+1}^2 = s_k^1, s_{k+1}^1 = s_k^0, \text{and } s_{k+1}^0 = w_k \\ w_k = u_k + s_k^1 + s_k^2 \end{cases}$$

The dotted lines in Fig. 10 represent the trellis termination for encoders 930-934. That is, tail bits in the data may come from the current contents of the memory elements 1010-1030, as shown in Fig. 10. Moreover, because of the turbo interleaving, the contents of the memory elements 1010-1030 at the beginning of trellis termination (after the encoding of information bits) may be different for each constituent encoder 930-934. Therefore, for an eight-state turbo code with three memory elements, a total of 3 x 3 or 9 tail input bits may be required to terminate constituent encoders 930, 932 and 934. Together with parity bits, a total of 9 x 2 or 18 bits may be transmitted for trellis termination.

Encoders 930-934 may also read systematic data sequentially and the parity data may come from constituent encoder 930. The turbo encoder 840 may continue this operation until P pairs of systematic and parity data have been written. At this time, the turbo encoder 840 may wait until an entire input burst has been stored.

Once an entire burst has been stored, the turbo encoder 840 may begin writing the systematic pattern and parity pairs from constituent encoder 932, and then systematic pattern and parity pairs from constituent encoder 934. This pattern continues until R more systematic and parity pairs have been written. At this time, the tail bits of constituent encoder 930 may be written.

The tail bits may alternate between systematic and parity bits. The systematic bits for the tail may be taken from constituent encoder 930 instead of the memory. After writing all six tail bits, the turbo encoder 840 may resume alternating the systematic pattern and parity from constituent encoder 932 with systematic pattern and parity from constituent encoder 934 until S more systematic and parity pairs have been written. At this point, the six tail bits for constituent encoder 932 may be written followed by the six tail bits for constituent encoder 934.

Constituent encoders 930-934, as described above, may store the encoded bits in a memory, such as a random access memory (not shown). Constituent encoders 930-934 may then output the encoded bits to puncturer 940. Puncturer 940 may then puncture the received data. Puncturer 940 may puncture the output bits of encoders 930-934 to achieve a desired code rate. For example, to achieve a code rate 1/2, puncturer 940 may puncture every other bit of the output of encoder 930-934. A puncturing pattern of "10" may be applied to the first two encoder outputs and a pattern of "01" may be applied to the last encoder output. This results in a code rate of $1/\{1\ 1 + (2/3 \times 1/2) + (2/3 \times 1/2) + (2/3 \times 1/2)\} = 1/2$.

Referring back to Fig. 8, in-route processing system 800 may use a periodic, TDMA structure that permits several terminals 110 to share the same in-route carrier or group of in-route carriers. The particular spectrum allocation associated with the carriers may vary with the geographical region and/or economic considerations. In one implementation, terminals 110 may transmit data in a portion of the Ku-band. For example, terminals 110 may be allocated a band from 14.0 GHz to 14.5 GHz for uplink to satellite 120 and frequencies from 11.7 GHz to 12.2 GHz may be used to receive downlink transmissions from satellite 120. In other implementations, other uplink and downlink bands may be used.

Terminals 110, consistent with the present invention, may transmit at 64 kilo symbols per second (ksps), 128 ksps and 256 ksps or other rates, with the minimum carrier spacing being 1.25 times the symbol rate. For example, for a 256 ksps rate, the minimum channel spacing may be 320 KHz.

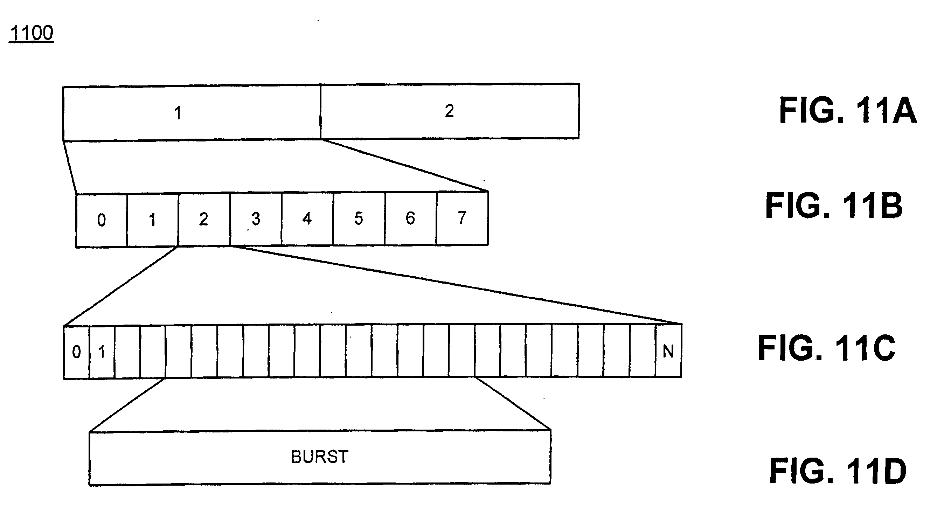

The TDMA structure, consistent with the present invention, may include a number of superframes, where each superframe includes a number of frames. For example, Fig. 11A illustrates an exemplary TDMA structure consistent with the present invention. As illustrated in Fig. 11A, TDMA structure 1100 includes a number of superframes that may be used for transmitting data from one or more terminals 110 to hub 130. Each superframe may include a number of individual frames. For example, superframe 1 in Fig. 11A includes eight frames, labeled as frames 0-7 in Fig. 11B. Each frame in Fig. 11B may have a duration of, for example, 45 milliseconds (ms). In this case superframe 1 in Fig. 11A has a duration of 8 x 45 ms or 360 ms.

Each frame in Fig. 11B may also be divided into a number of slots, as illustrated in Fig. 11C. The particular number of slots per frame depends upon the transmission rate. For example, terminal 110 may transmit at, for example, 128 ksps or 256 ksps. For a 128 ksps rate, each frame in Fig. 11B may include 80 slots, with each slot occupying 562.5 μs. For a 256 ksps rate, each frame in Fig. 11B may include 160 slots, with each slot occupying 281.25 microseconds (μs).

Each slot in Fig. 11C may also be capable of carrying a particular number of user bytes of data based on the type of coding used to encode the data. For example, for a 128 ksps turbo coded burst of data, each slot may include 9 bytes of user data and the number of bits per slot may be 144. In this case, the number of symbols/slot may be 72 (i.e., 2 bits of encoded data per each symbol). For a 256 ksps turbo coded burst, the number of bytes/slot may also be 9 and the number of symbols/slot may also be 72. Therefore, the burst of data illustrated in Fig. 11D may be transmitted over a particular number of available slots. If the burst is larger than the available number of slots, a portion of the burst may be stored and may represent backlogged data.

In an exemplary implementation, two types of bursts may be used in the in-route direction. For example, a user burst may be used for data traffic over the in-route channels and ranging bursts may be used by terminals 110 to obtain delay and power information and to carry resource requests to hub 130. Each of these types of burst is associated with a different time uncertainty in its arrival at the hub. This time uncertainty associated with the misalignment of the timing between hub 130 and terminals 110 and the uncertainties in the satellite 120 position may be designated as the aperture.

To compensate for the aperture, some conventional types of burst structures may include a period of "dead time" in the burst structure. For example, for a convolutionally coded burst structure, a number of symbols may be inserted prior to the user data to ensure that hub 130 is able to detect the start of the user data. These symbols may be all "1s" and may be used by hub 130 to detect the start of the user data. In addition, in a conventional IPoS system using convolutional coding, a continuous wave field may be required prior to the actual data payload field. The continuous wave field may include the carrier signal without any modulated data and may be used for burst detection and carrier frequency estimation at hub 130. In accordance with an exemplary implementation of the present invention, described in more detail below, no dead time or continuous wave fields may be required for the turbo coded burst structure.

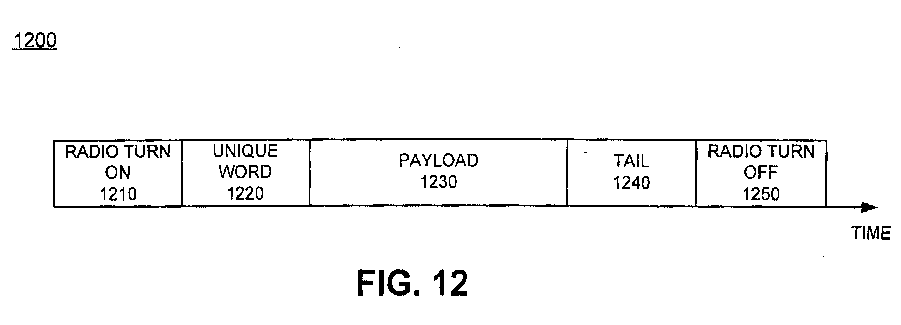

Fig. 12 illustrates an exemplary in-route variable length transmission turbo coded burst structure occupying one or more consecutive slots in a frame. Referring to Fig. 12, burst format 1200 includes a radio turn-on field 1210, a unique word field 1220, a payload field 1230, a tail field 1240 and a radio turn-off field 1250.

The radio turn-on field 1210 represents the ramp-up time needed by terminal 110 to control its radio for emission of the burst. The unique word field 1220 represents the preamble used to perform PHY layer processes related to frequency estimation, time estimation and the estimation of the beginning of the burst. Payload field 1230 represents the coded user data, such as IP data, being transmitted to hub 130. Payload field 1230 may include a data such as burst 550 (Fig. 5).

Tail field 1240 represents bits used to flush the encoders (e.g., encoders 930-934). Radio turn-off field 1250 represents the ramp-down period associated with the radio transmission from terminal 110. As illustrated in Fig. 12, no dead time is required between unique word field 1220 and payload 120. As described above, in conventional IPoS systems using convolutional coding, a dead time field may be required to ensure that hub 130 is able to properly identify the start of the user data. In addition, no continuous wave field may be required. Advantageously, eliminating a dead time field and continuous wave field reduce overhead associated with burst 1200, thereby increasing data throughput associated with transmitting data from terminal 110 to hub 130.

According to an exemplary implementation using a 128 ksps rate and a turbo coding, the frame overhead associated with transmitting burst 1200 may be one slot, with 80 slots per 45 millisecond frame. In this case, radio turn-on field 1210 may include three symbols and may have a duration of 23.4 µs, unique word field 1220 may include 24 symbols and may have a duration of 187.5 µs, turbo-coded payload field 1230 may include 72 * N symbols having a total duration of 562.5 * N µs, where N represents the number of assigned slots and each slot includes nine bytes of user traffic.

Tail field 1240 may include nine symbols and may have a total duration of 70.3 µs. Radio turn-off field 1250 may include 3.2 symbols and may have a total duration of 25 µs. As compared to conventional convolutional coding in which dead time is required, the burst structure illustrated in Fig. 12 for the turbo coded burst structure is much more efficient.

For a 256 ksps service burst structure, the frame overhead may also be one slot, with 160 slots per 45 ms frame. In this case, however, a burst may not continue through the middle of the frame time. Therefore, the 81st slot may either be the beginning of a burst or left unused. The tail 1240 and radio turn-off may be sent in a slot not allocated to terminal 110. For a 256 ksps service, radio turn-on field 1210 may include 5.9 symbols and may have a total duration of 23.0 µs. Unique word field 1220 may include 24 symbols and may have a total duration of 93.8 µs. Turbo-coded payload field 1230 may include 72 * N symbol and may have a total duration of 282.25 * N µs with each slot including 9 bytes of user traffic and N equaling the number of assigned slots. Tail field 1240 may include 9 symbols having a total duration of 35.2 µs. Radio turn-off field 1250 may include 6.4 symbols having a total duration of 25 µs. Similar to the discussion above with respect to the 128 ksps turbo coded structure, the 256 ksps turbo coded structure is much more efficient than a conventional, convolutionally coded burst structure, thereby resulting in increased data throughput.

## ACKNOWLEDGE OPERATION

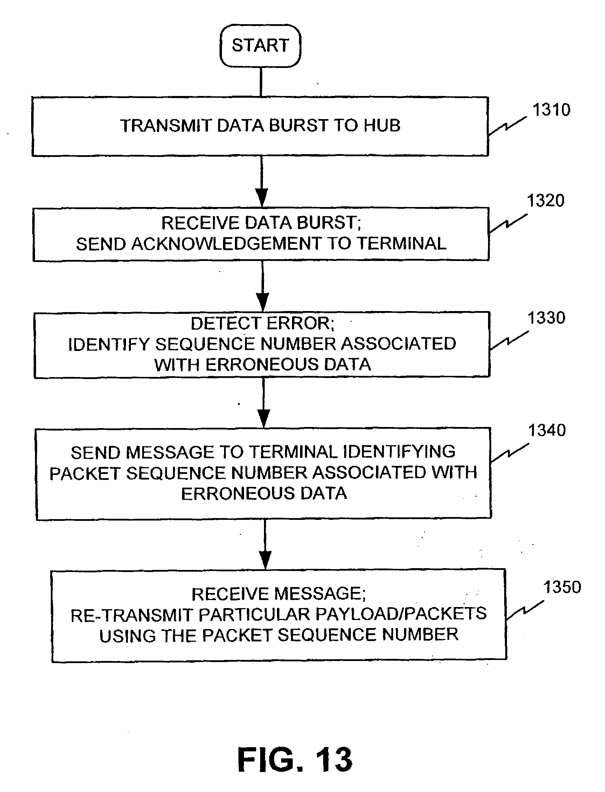

Network 100, consistent with the present invention, also provides a procedure in which hub 130 may acknowledge successful receipt of data from terminal 110 and may selectively request retransmission of particular data. Fig. 13 illustrates exemplary processing associated with the acknowledge operation procedure consistent with the present invention. Processing may begin when terminal 110 processes and transmits an in-route data burst to hub 130 (act 1310). The in-route burst may include the unique word 1220, payload 1230 and tail 1240 described above with respect to Fig. 12. The in-route burst may also be turbo coded as described above. Assume that the payload portion of the data burst is represented by burst 550 illustrated in Fig. 5.

Assume that hub 130 receives burst 550 from terminal 110 (act 1320). That is, terminal 110 transmits burst 550 to satellite 120, which relays the data to hub 130. Hub 130 receives burst 550 and determines whether any errors occurred during transmission. For example, hub 130 may demodulate and decode the data and use CRC field 538 (Fig. 5) in the burst payload 554 to determine whether an error occurred during transmission of burst 550. Assume that no error was detected. In this case, hub 130 sends an acknowledgement message to terminal 110 indicating that the data was received without errors (act 1320). The acknowledgement message may be used by terminal 110 to clear its buffers of recently sent data. For example, terminal 110 may store recently transmitted data until an acknowledgment is received. After an acknowledgement is received, terminal 110 may clear its buffers of the data that has been acknowledged.

Assume that terminal 110 transmits another data burst 550 to hub 130. Further assume that hub 130 detects that an error occurred during transmission of burst payload 554 (act 1330). For example, assume that the CRC field 538 in the burst payload 554 indicates that an error occurred during transmission. In this case, hub 130 may identify the sequence number 780 included in the header 532 of burst payload 554 associated with the received data burst (act 1330). For example, as discussed above with respect to Fig. 7, MAC header 532 may include a sequence number field 780 which identifies a byte address of the first byte of the encapsulated payload or fragment in burst payload 554.

Hub 130 identifies the sequence number in field 780 associated with the payload 554 in which the error was detected. Hub 130 may then transmit a message including the identified packet sequence number to terminal 110 (act 1340). The message may indicate that the payload was received with errors and request that the erroneous portion of the payload identified by the packet sequence number be retransmitted.

Terminal 110 receives the message, identifies the packet sequence number and retransmits the particular payload/packets identified by the packet sequence number (act 1350). The packets, as discussed above, may be stored in a memory at terminal 110 until an acknowledgement of successful transmission is received. In this manner, terminal 110 may only have to re-transmit the portion of the payload that contained the errors, instead of having to go back and repeat a number of transmissions that may be part of the same burst but do not contain errors. Hub 130 may then reassemble the payload when it receives the re-transmitted packets without errors. This saves considerable time as compared to retransmitting the entire burst and/or additional bursts received after the error was detected. Advantageously, this reduces processing time and increases data throughput as compared to conventional systems.

Systems and methods consistent with the present invention transmit turbo coded data from terminals 110 to hub 130. This provides an efficient manner of transmitting IP data via satellite with less overhead than conventional IPoS systems. In addition, a selective repeat process may further increase efficiency by limiting the amount of data retransmitted when an error is detected.

The foregoing description of preferred embodiments of the present invention provides illustration and description, but is not intended to be exhaustive or to limit the invention to the precise form disclosed. Modifications and variations are possible in light of the above teachings or may be acquired from practice of the invention. For example, while series of acts have been described with respect to Figs. 4 and 13, the order of the acts may be modified in other implementations consistent with the present invention. Moreover, non-dependent acts may be performed in parallel. In addition, the present invention has been described as using particular equations to encode/interleave various information. It should be understood that other statistical methods may also be used in other implementations of the invention.

No element, act, or instruction used in the description of the present application should be construed as critical or essential to the invention unless explicitly described as such. Also, as used herein, the article "a" is intended to include one or more items. Where only one item is intended, the term "one" or similar language is used.

The scope of the invention is defined by the claims and their equivalents.

**Claims**

1. A system, comprising:

   at least one logic device configured to:

      receive data packets from a user device,
      encode the data packets using a turbo coding scheme,
      modulate the turbo coded data, and
      forward the modulated data; and

   a transmitter configured to:

      receive the modulated data, and
      transmit the modulated data to a satellite.

2. The system of claim 1, wherein the transmitter is further configured to:

   transmit the modulated data to the satellite using a burst structure including a unique word field, a payload field and a tail field.

3. The system of claim 2, wherein the burst structure includes no dead time between the unique word field and the payload field.

4. The system of claim 1, wherein the modulated data comprises at least one media access control (MAC) protocol data unit (PDU), the at least one logic device being further configured to:

   modulate the turbo coded data using a number of symbols, each symbol representing two bits of the MAC PDU.

**5.** The system of claim 1, wherein the modulated data comprises at least one media access control (MAC) protocol data unit (PDU), the at least one MAC PDU including a MAC header, wherein the MAC header includes a sequence number field.

**6.** The system of claim 5, further comprising:

a receive device configured to:

receive the modulated data,
demodulate the modulated data,
decode the demodulated data,
detect whether an error occurred during transmission of the at least one MAC PDU, and
identify, when an error has been detected, a sequence number associated with the at least one MAC PDU based on contents of the sequence number field.

**7.** The system of claim 6, wherein the receive device is further configured to:

generate a message including the identified sequence number, the message requesting that at least a portion of the MAC PDU in which the error occurred be re-transmitted, and
transmit the message to the at least one logic device.

**8.** The system of claim 7, wherein the at least one logic device is further configured to:

receive the message, and
re-transmit at least the portion of the MAC PDU identified by the sequence number.

**9.** The system of claim 1, wherein the turbo coded data is transmitted at a rate of at least one of 128 kilo symbols per second and 256 kilo symbols per second.

**10.** A method for transmitting Internet Protocol (IP) data, comprising:

receiving, by a terminal device, a plurality of data packets from a user device; encoding the data packets using a turbo coding scheme;
modulating the turbo coded data; and
transmitting the modulated data to a satellite.

**11.** The method of claim 10, further comprising:

receiving, by the satellite, the modulated data; and
forwarding the received data to a hub.

**12.** The method of claim 11, wherein the modulated data is transmitted to the satellite using a data structure comprising at least one media access control (MAC) protocol data unit (PDU).

**13.** The method of claim 12, wherein the MAC PDU comprises a MAC header, the MAC header a sequence number field.

**14.** The method of claim 14, wherein the sequence number field identifies a byte address of a first byte of a payload portion of the MAC PDU.

**15.** The method of claim 11, further comprising:

receiving, by the hub, the modulated data;
demodulating the modulated data;
decoding the demodulated data; and
determining if an error occurred during transmission.

**16.** The method of claim 15, further comprising:

transmitting a re-transmission request message to the terminal device, the re-transmission request including a sequence number identifying a payload in which the error was detected.

**17.** The method of claim 10, wherein the transmitting comprises:

transmitting the data at 128 kilosymbols per second.

**18.** The method of claim 10, wherein the transmitting comprises:

transmitting the data at 256 kilosymbols per second.

**19.** A system for transmitting Internet Protocol data, comprising:

means for receiving IF data packets;
means for encoding the IP data packets using a turbo coding scheme;
means for modulating the turbo coded IP data packets; and
means for transmitting the modulated IP data packets to a receive device via a satellite.

**20.** The system of claim 19, wherein the means for encoding comprises:

means for parsing the data packets,
means for interleaving the data packets,
means for coding the interleaved data packets, and
means for puncturing the coded data.

**21.** A device for processing Internet Protocol data, comprising:

a receiver configured to receive Internet Protocol (IP) data; and
logic coupled to the receiver, the logic configured to:

encode the IP data using a turbo coding scheme,
modulate the encoded data, and
forward the modulated data to an antenna for transmission.

**22.** The device of claim 21, wherein the logic comprises:

a scrambler configured to:

receive the IP data, and
randomize the received data;

an encoder coupled to the scrambler, the encoder configured to:

receive the data from the scrambler,
turbo code the data received from the scrambler; and

an interleaver coupled to the encoder, the interleaver configured to:

receive the turbo coded data from the encoder, and
modify the order of the turbo coded data.

**23.** The device of claim 22, wherein the logic further comprises:

a modulator coupled to the interleaver, the modulator configured to:

modulate the interleaved data over a number of carriers, and

a digital-to-analog (D/A) converter coupled to the modulator, the D/A converter configured to convert the modulated data into an analog signal.

**24.** A terminal configured to transmit and receive data packets via satellite, comprising:

a memory configured to store data; and
at least one logic device configured to:

transmit Internet Protocol (IP) data to a hub via satellite,
store the IP data in the memory until an acknowledgment from the hub is received,
delete the IP data in the memory when the acknowledgment is received,
receive a message from the hub when an error in the IP data was detected, the message including a packet sequence number, and
re-transmit a portion of the IP data based on the packet sequence number.

FIG. 1

EP 1 420 541 A2

110

FIG. 2

EP 1 420 541 A2

110

HIGHER LAYERS

```
+-------------------------------------------+
|                                           |
|        NETWORK ADAPTATION LAYER           |
|                   310                     |
|                                           |
+-------------------------------------------+


+-------------------------------------------+
|                                           |
|        DATA LINK CONTROL LAYER            |
|                   320                     |
|                                           |
+-------------------------------------------+


+-------------------------------------------+
|                                           |
|             PHYSICAL LAYER                |
|                   330                     |
|                                           |
+-------------------------------------------+
```

# FIG. 3

START

RECEIVE DATA    410

FRAGMENT DATA    420

GENERATE MAC PDUs    430

GENERATE PHYSICAL LAYER BURST; ENCODE
AND MODULATE DATA BURST    440

TRANSMIT DATA BURST    450

# FIG. 4

EP 1 420 541 A2

**FIG. 5**

EP 1 420 541 A2

532

| BACKLOG IND. 610 | ADAPTATION IND. 620 | VERSION 630 | RESERVED 640 | ADAPTATION LENGTH 650 | SERIAL NUMBER 660 | BACKLOG 670 |
|---|---|---|---|---|---|---|

## FIG. 6

EP 1 420 541 A2

532

| BACKLOG IND. 710 | ADAPT. IND. 720 | START 730 | RSVD. 740 | TRAFFIC PRIORITY 750 | RSVD. 760 | ADAPTATION LENGTH 770 | SEQ. NUM. 780 | BACKLOG 790 |
|---|---|---|---|---|---|---|---|---|

# FIG. 7

FIG. 8

FIG. 9

840

PARSER
910

INTERLEAVER
922

INTERLEAVER
920

CONSTITUENT
ENCODER
934

CONSTITUENT
ENCODER
932

CONSTITUENT
ENCODER
930

PUNCTURER
940

# FIG. 10

EP 1 420 541 A2

FIG. 11D

BURST

FIG. 11C

| N | | | | | | | | | | | | | | | | | | | 1 | 0 |

FIG. 11B

| 7 | 6 | 5 | 4 | 3 | 2 | 1 | 0 |

FIG. 11A

| 2 | 1 |

1100

1200

| RADIO TURN ON 1210 | UNIQUE WORD 1220 | PAYLOAD 1230 | TAIL 1240 | RADIO TURN OFF 1250 |
|---|---|---|---|---|

TIME →

# FIG. 12

START

TRANSMIT DATA BURST TO HUB — 1310

RECEIVE DATA BURST;
SEND ACKNOWLEDGEMENT TO TERMINAL — 1320

DETECT ERROR;
IDENTIFY SEQUENCE NUMBER ASSOCIATED
WITH ERRONEOUS DATA — 1330

SEND MESSAGE TO TERMINAL IDENTIFYING
PACKET SEQUENCE NUMBER ASSOCIATED WITH
ERRONEOUS DATA — 1340

RECEIVE MESSAGE;
RE-TRANSMIT PARTICULAR PAYLOAD/PACKETS
USING THE PACKET SEQUENCE NUMBER — 1350

# FIG. 13